# EUROPÄISCHE PATENTSCHRIFT

(11) **EP 1 497 575 B1**
(45) Veröffentlichungstag und Bekanntmachung des Hinweises auf die Patenterteilung: **15.11.2006**
(21) Anmeldenummer: 03725027.1
(22) Anmeldetag: 15.04.2003
(51) Int. Cl.: F16H 61/02, F16H 61/16, F16H 61/30, F15B 9/00

(54) **ELEKTRO-PNEUMATISCHE SCHALTEINHEIT**
ELECTROPNEUMATIC GEARSHIFT UNIT
UNITE DE CHANGEMENT DE VITESSES ELECTROPNEUMATIQUE

(30) Priorität: 19.04.2002 DE 10217482
(43) Veröffentlichungstag der Anmeldung: 19.01.2005
(73) Patentinhaber: ZF FRIEDRICHSHAFEN AG, 88038 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2003/003890
(87) Internationale Veröffentlichungsnummer: WO 2003/089815

(56) Entgegenhaltungen:
- DE-A- 10 029 497
- DE-A- 19 839 855
- US-A1- 2002 032 100

## Beschreibung

Die Erfindung betrifft eine elektro-pneumatische Schalteinheit nach dem Oberbegriff des Anspruchs 1.

Getriebe von größeren Nutzfahrzeugen sind in einen Hauptgetriebeteil, ein Splitgruppengetriebe und ein Bereichsgruppengetriebe aufgeteilt. Moderne Getriebe vor allem in Nutzfahrzeugen weisen dabei eine durch eine Pneumatik unterstützte Schalteinrichtung auf, die pneumatische Schaltungen im Splitgruppengetriebe und im Bereichsgruppengetriebe durchführt, während die Schaltungen im Hauptgetriebeteil manuell vom Fahrzeugführer durchgeführt werden und dabei in der ausübenden Kraft durch die Pneumatik unterstützt werden können.

Aus der DE 198 39 854 A1 ist eine Schaltvorrichtung bekannt geworden, bei der eine Servounterstützungseinrichtung die Schaltkraft des Fahrers unterstützt. Dabei soll die Zufuhr der unterstützenden Druckluft reduziert werden, beispielsweise nur dann zugelassen werden, wenn die Fahrzeugkupplung betätigt wird. Dafür sind zusätzliche Ventile erforderlich, die eine Reduzierung ermöglichen. Der Offenbarungsgehalt der DE 198 39 854 A1 soll vollinhaltlich auch Gegenstand dieser Beschreibung sein.

Aus der gattungsbildenden der DE 100 29 497 A1 ist eine elektro-pneumatische Schalteinheit für ein vielgängiges Fahrzeuggetriebe bekannt geworden, bei der mit einer Vielzahl von gesteuerten Ventilen das aus mehreren Baugruppen geschaltet wird und gleichzeitig zur Vermeidung von Fehlfunktionen elektronisch überwacht wird. Dazu werden die Ventile von einem zentralen Fahrzeugführungsrechner angesteuert. Der Offenbarungsgehalt der DE 100 29 497 A1 soll vollinhaltlich auch Gegenstand dieser Beschreibung sein. Eine Beeinflussung der unterstützenden Kraft findet nicht statt.

Der Erfindung liegt die Aufgabe zugrunde, ohne großen Zusatzaufwand die Zufuhr an unterstützender Druckluft einer Schalteinrichtung zu bestimmen.

Die Aufgabe wird gelöst durch eine Schalteinheit mit den Merkmalen des Anspruchs 1. Ausgestaltungen sind Gegenstand von Unteransprüchen.

Eine elektro-pneumatische Schalteinheit für ein Fahrzeuggetriebe umfasst ein manuell vom Fahrzeugführer an einem Schalthebel geschaltetes Hauptgetriebe und ein über Ventile elektro-pneumatisch geschaltetes Splitgruppengetriebe. Die Schaltungen des Splitgruppengetriebes sind manuell vom Fahrzeugführer durch Schalter an dem Schalthebel vorwählbar. Ein Sensor oder Schalter erkennt eine manuelle Betätigung der Fahrzeugkupplung durch den Fahrzeugführer und gibt dieses Signal an eine elektronischen Steuereinrichtung weiter, die dann die Ventile öffnet. Es ist ein Wechselventil vorgesehen, das mit je einer Eingangsöffnung mit einer Ausgangsleitung der Ventile verbunden ist. Die Ventile öffnen jedes Mal bei Vorliegen eines Kupplungsbetätigungssignal und zwar öffnet immer dasjenige der beiden Ventile, das bei der letzten Betätigung der Schalter für das Splitgruppengetriebe am Schalthebel vorgewählt wurde. Eine Ausgangsöffnung des Wechselventils ist über eine Pneumatikleitung mit einer pneumatischen Servounterstützungseinrichtung verbunden ist, die den Fahrzeugführer bei der manuellen Schaltung im Hauptgetriebe unterstützt. Das Wechselventil lässt nur die Luftzufuhr von einem der beiden Ventile des Splitgruppengetriebes zu der Pneumatikleitung und damit zur Servounterstützungseinrichtung zu, während die andere Anschlussleitung durch das Wechselventil abgesperrt wird. Dadurch wird verhindert, dass der-angeschlossene Schaltzylinder für das Splitgruppengetriebe eine Luftzufuhr für seine beiden Schaltrichtungen erhält. Nur die Anschlussleitung und damit nur der Teil des Schaltzylinders soll Luft bekommen, der auch vorgewählt wurde, wobei nicht wichtig ist, ob die Vorwahl aktuell neu vom Fahrzeugführer vorgenommen wurde, oder bei der letzten entsprechenden Betätigung der Schalter am Schalthebel erfolgte. Für die Pneumatikleitung und damit für die Servounterstützungseinrichtung ist es gleichbedeutend welcher der beiden Seiten des Schaltzylinders Luft bekommt. Die Servounterstützungseinrichtung soll immer dann Luft bekommen, wenn gekuppelt wird. Findet beim Schaltvorgang im Hauptgetriebe keine Schaltung im Splitgruppengetriebe statt, so wird bei der Betätigung der Kupplung das gleiche Ventil wieder angesteuert, dass bereits bei der letzten Schaltung des Splitgruppengetriebes angesteuert und geschaltet wurde. Dadurch lässt dieses Ventil Luft an das Wechselventil und damit an die Servounterstützungseinrichtung durch, ohne den Schaltzylinder des Splitgruppengetriebes selbst in seiner Position zu verändern.

In einer vorteilhaften Ausgestaltung der Erfindung ist die Pneumatikleitung zwischen dem Wechselventil und der Servounterstützungseinrichtung derart ausgebildet, dass die das Wechselventil durchströmende Luft direkt in die pneumatische Servounterstützungseinrichtung zur Unterstützung des Fahrzeugführers gelangt. In einer weiteren vorteilhaften Ausführungsform umfasst die Servounterstützungseinrichtung ein 3/2-Wegeventil, welches durch die die Pneumatikleitung durchströmende Luft angesteuert wird und dann Luft aus einem Luftvorrat an die pneumatische Servounterstützungseinrichtung freigibt.

Im bisherigen Stand der Technik war die Funktion der beiden Ventile für die Splitgruppenschaltung bekannt, die darin bestand, immer bei Erreichen des Kupplungstrennpunktes und wenn eine Schaltung im Splitgruppengetriebe über die Schalter am Schalthebel vorgewählt wurde, das Splitgruppengetriebe in die Stellung Schnell (S) oder Langsam (L) zu schalten. Der Kupplungstrennpunkt wurde über einen entsprechenden Schalter oder Sensor erkannt. Bei Unterschreiten des Kupplungstrennpunktes, d. h. wenn die Kupplung schließt, wurde das zuvor angesteuerte Magnetventil wieder stromlos geschaltet. Nach der Erfindung übernehmen die Ventile die zusätzliche Funktion, bei jeder Betätigung der Kupplung bzw. bei jedem Erreichen des Kupplungstrennpunktes Luft an das Wechselventil und damit an die Servounterstützungseinrichtung freizugeben. Dadurch wird nur im ausgekuppelten Zustand eine Zufuhr der die Handschaltkraft unterstützenden Servokraft zugelassen.

Die Erfindung wird anhand einer Zeichnung näher erläutert:
Es zeigen:
   - Fig. 1: eine schematische Darstellung mit Anordnung des Getriebes;
   - Fig. 2: einen typischen Schaltgriff mit Schaltbild;
   - Fig. 3: eine erste Ausgestaltung der Schalteinheit mit direkter Luftzufuhr und
   - Fig. 4: eine zweite Ausgestaltung der Schalteinheit mit Luftzufuhr über Ventil.

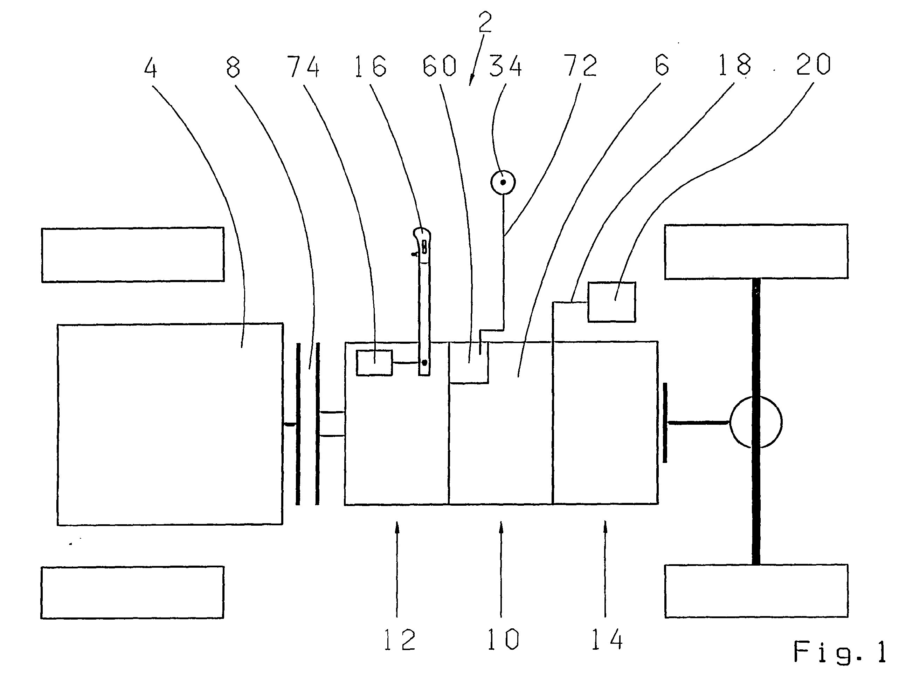

Die Fig. 1 zeigt ein Fahrzeug 2 mit einer Antriebsmaschine 4, einem Getriebe 6 und einer dazwischen angeordnete Kupplung 8. Das Getriebe 6 weist einen Hauptgetriebeteil 10, ein Splitgruppengetriebe 12 und ein Bereichsgruppengetriebe 14 auf. Der Hauptgetriebeteil 10 wird manuell durch den Fahrzeugführer über einen Schalthebel 16 geschaltet. Das Getriebe 6 ist über Verbindungsleitungen 18 mit einer elektronischen Steuereinrichtung 20 verbunden. Über eine Zuleitung 72 ist ein im Gehäuse des Getriebes 6 angeordneter Ventilblock 60 mit einem Luftvorrat 34 verbunden. Eine an oder im Gehäuse monierte Servounterstützungseinrichtung 74 ist mit dem Schalthebel bzw. den von dem Schalthebel betätigten Elementen im Hauptgetriebeteil 10 wirksam verbunden.

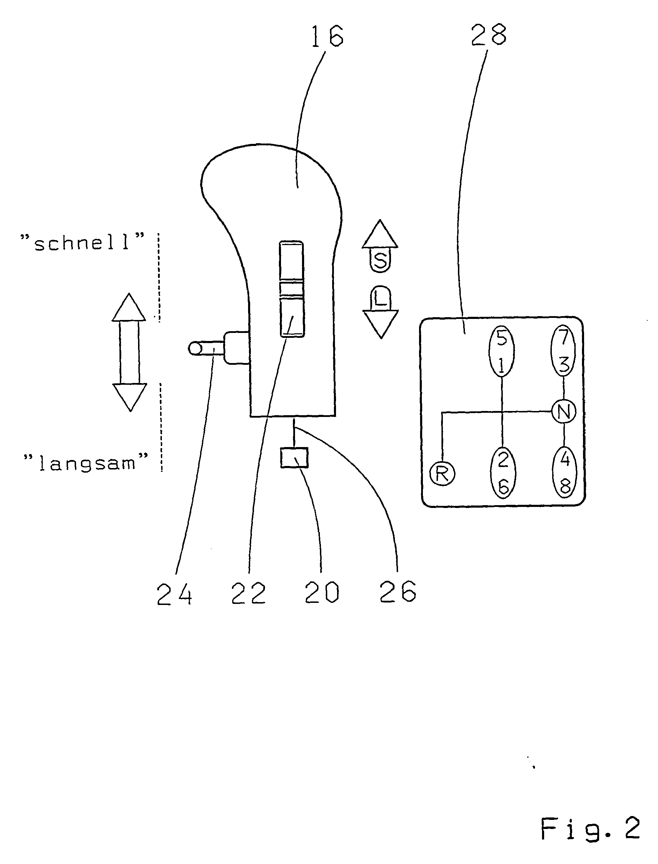

Die Fig. 2 zeigt einen beispielhaften Schalthebel 16 in einer vergrößerten Darstellung für ein Schaltbild 28, das als "Überlagertes-H" bezeichnet wird. Seitlich am Schalthebel 16 ist ein Kippschalter 22 zur Vorwahl der Schaltung des Splitgruppengetriebes 12 angeordnet. An der Vorderseite des Schalthebels 16 ist ein weiterer Kippschalter 24 vorgesehen, über den das Bereichsgruppengetriebe 14 geschaltet wird. Bei beiden Kippschaltern 22, 24 handelt es sich um elektrische Schalter, die über eine elektrische Verbindungsleitung 26 mit der Steuereinrichtung 20 verbunden sind. Bei einer Schaltung mit einem Schaltbild 28 ist in den Vorwärtsgängen jede Endstellung des Schalthebels 16 zwei Übersetzungsstufen zugeordnet, die sich jeweils um den Übersetzungssprung des Bereichsgruppengetriebes 14 unterscheiden. Bei der Kipphebelstellung "langsam" sind die Übersetzungsverhältnisse eins bis vier und der Rückwärtsgang geschaltet, bei Kipphebelstellung "schnell" sind die Gänge fünf bis acht geschaltet. Die Neutralstellung des Hauptgetriebeteils 10 ist in der Gasse zwischen den Übersetzungsverhältnissen drei und vier bzw. sieben und acht angedeutet.

Den Wechsel des Bereichsgruppengetriebes 14 muss der Fahrzeugführer mittels des Kippschalters 24 am Schalthebel 16 vorwählen. Der Wechsel wird ausgeführt, sobald im Hauptgetriebeteil 10 manuell die Neutralstellung eingelegt wird.

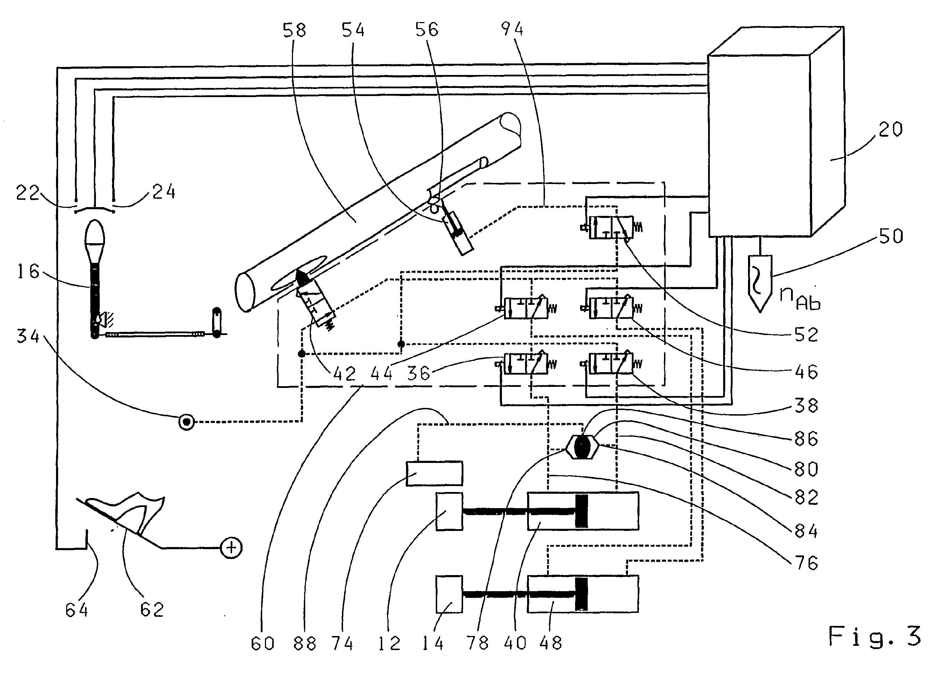

Das Splitgruppengetriebe 12 wird in den Positionen "L" oder "S" mit dem Kippschalter 22 seitlich am Schalthebel 16 vorgewählt und durch die Betätigung der Kupplung 8 geschaltet. Dazu zeigt die Fig. 3 ein Kupplungspedal 62, das einen elektrischen Schalter 64 betätigt, der mit der Steuereinrichtung 20 verbunden ist. Die Zulassung von Schaltungen im Splitgruppengetriebe 12 wird in dieser Anordnung von der Steuereinrichtung 20 aus bei geschlossenem Schalter 64 bestimmt, wobei an den zwei elektropneumatischen 3/2-WegeVentilen 36 und 38 Luft permanent ansteht. Die Ventile 36 und 38 sind mit der elektronischen Steuereinrichtung 20 verbunden und werden in Abhängigkeit der Schalterstellung des Kippschalters 22 am Schalthebel 16 angesteuert. Bei getretenem Kupplungspedal 62 wird entweder Luft in die linke oder in die rechte Kammer des Schaltzylinders 40 des Splitgruppengetriebes 12 eingelassen, wobei dann die jeweils andere Kammer über die Ventile 36 bzw. 38 entlüftet wird.

Wie bereits ausgeführt muss der Fahrzeugführer den Wechsel des Bereichsgruppengetriebes 14 mittels des Kippschalters 24 am Schalthebel 16 vorwählen. Der Wechsel wird dann ausgeführt, sobald im Hauptgetriebeteil 10 manuell die Neutralstellung eingelegt wird. In der Neutralstellung gibt ein mechanisch an die Schaltbewegung gekoppeltes Hauptabschaltventil 42 die Luft vom Luftvorrat 34 frei zu zwei elektropneumatischen 3/2-Wege-Ventilen 44 und 46. Die Ventile 44 und 46 sind mit der elektronischen Steuereinrichtung 20 verbunden und werden in Abhängigkeit der Schalterstellung des Kippschalters 24 am Schalthebel 16 angesteuert. Bei Erkennen der Neutralstellung durch das Hauptabschaltventil 42 wird über das jeweils angesteuerte Ventil 44 oder 46 entweder Luft in die linke oder in die rechte Kammer des Schaltzylinders 48 des Bereichsgruppengetriebes 14 eingelassen, wobei dann die jeweils andere Kammer über das nicht angesteuerte Ventil 46 bzw. 44 entlüftet wird.

Um Fehlschaltungen zu vermeiden, müssen in der Schalteinrichtung zusätzliche Absicherungen getroffen werden. Dazu ist ein Gassensperrzylinder 54 vorgesehen, der vorzugsweise in der langsamen Übersetzungsstufe des Bereichsgruppengetriebes oberhalb einer bestimmten Abtriebsdrehzahl des Getriebes 6 das Schalten von der rechten Schaltgasse des Schaltbildes 28 in die linke Schaltgasse verhindert, d. h. das Schalten von der dritten oder vierten Übersetzungsstufe in die erste oder zweite Übersetzungsstufe wird verhindert. Dies soll den Fahrzeugführer davor bewahren, irrtümlich in die erste statt in die fünfte Übersetzungsstufe zu schalten, wenn er vergessen hat, mit dem Kippschalter 24 die schnelle Übersetzung in dem Bereichsgruppengetriebe vorzuwählen. In der schnellen Übersetzungsstufe des Bereichsgruppengetriebes kann die selbe Einrichtung dazu verwendet werden, Schaltungen von der achten in die fünfte Übersetzungsstufe zu verhindern. Die Abtriebsdrehzahl des Getriebes 6 wird von einem Sensor 50 erfasst und als Signal an die elektronische Steuereinrichtung 20 weitergegeben. Die Steuereinrichtung 20 gibt bei zu hoher Abtriebsdrehzahl ein Signal an ein elektropneumatisches 3/2-Wege-Ventil 52 ab, das Luft aus dem Luftvorrat 34 über die Leitung 94 zu dem Gassensperrzylinder 54 gelangen lässt, dessen Stößel über einen Umlenkhebel 56 in die Schaltwelle 58 eingreift und diese in Richtung der rechten Schaltgasse des Schaltbildes 28 drückt. Diese Anordnung ist vom Fahrzeugführer mit einem erhöhten Kraftaufwand überdrückbar und erlaubt somit in Extremsituationen das Schalten der Übersetzungsstufen in der linken Schaltgasse des Schaltbildes 28.

Eine Gruppensperre unterdrückt oberhalb einer vorgegebenen Fahrzeuggeschwindigkeit das Schalten des Bereichsgruppengetriebes 14 in die langsame Übersetzung und schützt sowohl die Synchronisierung des Bereichsgruppengetriebes 14 als auch die Synchronisierungen des Hauptgetriebeteils 10. Die Fahrzeuggeschwindigkeit wird über den Sensor 50 entsprechend der Getriebeabtriebsdrehzahl erfasst und als Signal an die Steuereinrichtung 20 weitergegeben. Die Steuereinrichtung 20 steuert in Abhängigkeit dieses Signals die Ventile 36 bzw. 38 an und lässt ein Schalten in die langsame Übersetzung nur bei Vorliegen entsprechender zulässiger Signale zu.

Die Ventile 36, 38, 42, 44, 46, 52 und 54 sind gemeinsam in dem Ventilblock 60 als einem gemeinsamen Gehäuse untergebracht, der unmittelbar an ein Gehäuse, in welchem die Schaltwelle 58 des Getriebes 6 untergebracht ist, montiert wird. Dadurch ergibt sich eine kompakte Einheit des Ventilblocks 60, der am Getriebe 6 angeordnet ist (Fig. 1). Durch die geringen Leitungslängen zwischen den einzelnen Ventilen ergeben sich vorteilhaft kurze Reaktionszeiten und Schaltzeiten. Die elektrische Verbindung zwischen Ventilblock 60 und Steuereinrichtung 20 kann über einen zentralen Elektroanschluss am Ventilblock 60 erfolgen. Der Ventilblock 60 kann an ein bestehendes Getriebe angeschlossen werden, ohne dass konstruktive Änderungen des Getriebes erforderlich sind.

Vom Ventil 36 führt eine Ausgangsleitung 76 zum Schaltzylinder 40 des Splitgruppengetriebes 12 und zu einer ersten Eingangsöffnung 78 eines Wechselventils 80. Vom Ventil 38 führt eine Ausgangsleitung 82 zum Schaltzylinder 40 des Splitgruppengetriebes 12 und zu einer zweiten Eingangsöffnung 84 des Wechselventils 80. Erhält das Wechselventil 80 Luft von einer der Eingangsöffnungen 78 oder 84, so verschließt es die jeweils andere Eingangsöffnung 84 oder 78. Dadurch gelangt keine Luft in eine nicht gewollte Arbeitskammer des Schaltzylinders 40. Eine Ausgangsöffnung 86 des Wechselventils 80 ist mit einer Pneumatikleitung 88 verbunden, an der die Servounterstützungseinrichtung 74 angeschlossen ist. Wenn die pneumatischen Leitungen und die Durchlässe durch die Ventile ausreichend dimensioniert sind, genügt die die Pneumatikleitung 88 durchströmende Luft aus, um eine ausreichende Kraft in der Servounterstützungseinrichtung 74 zu erzeugen.

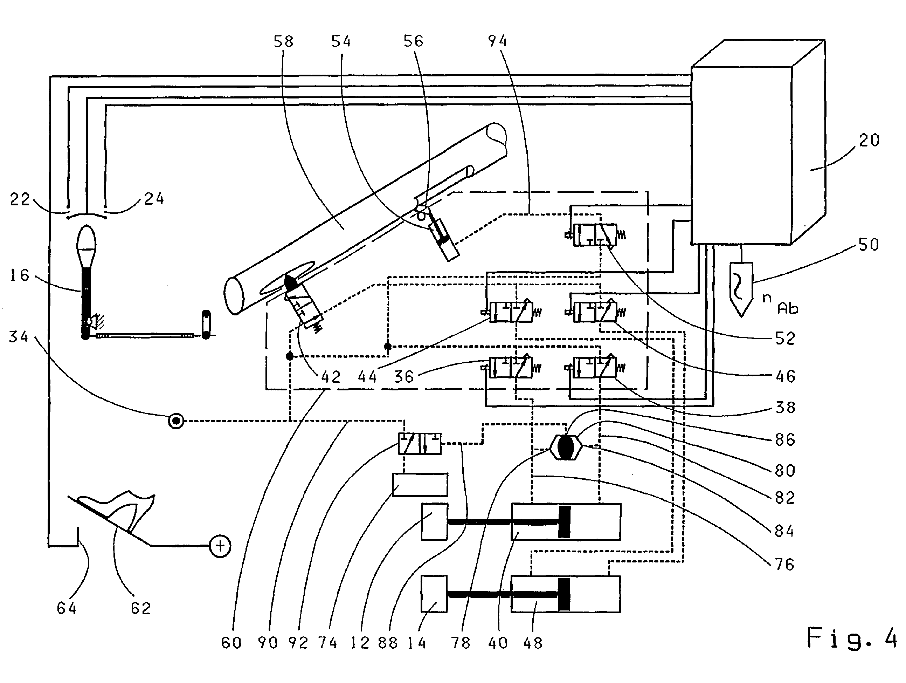

In der Fig. 4 ist die Pneumatikleitung 88 im Gegensatz zur Fig. 3 nicht direkt an die Servounterstützungseinrichtung angeschlossen, sondern über die Pneumatikleitung 88 wird ein 3/2-Wege-Ventil 92 angesteuert, das dann bei Ansteuerung die Luft aus dem Luftvorrat 34 über eine Leitung 90 an die Servounterstützungseinrichtung 74 freigibt.

### Bezugszeichen

- 2: Fahrzeug
- 4: Antriebsmaschine
- 6: Getriebe
- 8: Kupplung
- 10: Hauptgetriebeteil
- 12: Splitgruppengetriebe
- 14: Bereichsgruppengetriebe
- 16: Schalthebel
- 18: Verbindungsleitung
- 20: Steuereinrichtung
- 22: Kippschalter
- 24: Kippschalter
- 26: Verbindungsleitung
- 28: Schaltbild
- 34: Luftvorrat
- 36: Ventil
- 38: Ventil
- 40: Schaltzylinder
- 42: Hauptabschaltventil
- 44: Ventil
- 46: Ventil
- 48: Schaltzylinder
- 50: Sensor
- 52: Ventil
- 54: Gassensperrzylinder
- 56: Umlenkhebel
- 58: Schaltwelle
- 60: Ventilblock
- 62: Kupplungspedal
- 64: Schalter
- 72: Zuleitung
- 74: Servounterstützungseinrichtung
- 76: Ausgangsleitung
- 78: Eingangsöffnung
- 80: Wechselventil
- 82: Ausgangsleitung
- 84: Eingangsöffnung
- 86: Ausgangsöffnung
- 88: Pneumatikleitung
- 90: Leitung
- 92: Ventil
- 94: Leitung

## Patentansprüche

1. Elektro-pneumatische Schalteinheit für ein Fahrzeuggetriebe (6), das ein manuell vom Fahrzeugführer an einem Schalthebel (16) geschaltetes Hauptgetriebeteil (10) und ein über Ventile (36, 38) pneumatisch geschaltetes Splitgruppengetriebe (12) umfasst, dessen Schaltungen manuell vom Fahrzeugführer an dem Schalthebel (16) vorwählbar sind, und mit einem Sensor (64), der eine manuelle Betätigung einer Fahrzeugkupplung (8) durch den Fahrzeugführer erkennt, und mit einer elektronischen Steuereinrichtung (20), die die Ventile (36, 38) öffnet, **dadurch gekennzeichnet, dass** ein Wechselventil (80) vorgesehen ist, das mit je einer Eingangsöffnung (78, 84) mit einer Ausgangsleitung (76, 82) der Ventile (36, 38) verbunden ist, die bei Vorliegen eines Kupplungsbetätigungssignals öffnen, und dass das Wechselventil (80) mit einer Ausgangsöffnung (86) über eine Pneumatikleitung (88) mit einer pneumatischen Servounterstützungseinrichtung (74) verbunden ist, die den Fahrzeugführer bei der manuellen Schaltung im Hauptgetriebeteil (10) unterstützt.

2. Elektro-pneumatische Schalteinheit nach Anspruch 1, **dadurch gekennzeichnet, dass** die Pneumatikleitung (88) zwischen dem Wechselventil (80) und der Servounterstützungs-einrichtung (74) derart ausgebildet ist, dass die das Wechselventil (80) durchströmende Luft direkt in die pneumatische Servounterstützungseinrichtung (74) zur Unterstützung des Fahrzeugführers gelangt.

3. Elektro-pneumatische Schalteinheit nach Anspruch 1, **dadurch gekennzeichnet, dass** die Servounterstützungseinrichtung (74) ein 3/2-Wegeventil (92) umfasst, welches durch die die Pneumatikleitung (88) durchströmende Luft angesteuert wird und Luft aus einem Vorratsbehälter (34) an die pneumatische Servounterstützungseinrichtung (74) freigibt.

## Claims

1. The invention relates to an electropneumatic shifting unit for an automotive transmission (6), which comprises a main transmission component (10) manually operated by the driver by means of a shift lever (16) and a splitter unit (12) pneumatically shifted by means of valves (36, 38), with the shifting operations of this unit being pre-selectable by the driver by means of the shift lever (16), with a sensor (64) recognizing manual actuation of a vehicle clutch (8) by the driver, and with an electronic control device (20) opening the valves (36, 38), **characterized in that** a shuttle valve (80) is provided, each inlet opening of which (78, 84) is connected to an outlet opening (76, 82) of the valves (36, 38), which will open upon output of a clutch actuation signal, and that an outlet opening (86) of the shuttle valve (80) is connected via a pneumatic line (88) to a pneumatic servo unit (74) assisting the driver's manual shifts in the main transmission component (10).

2. An electropneumatic shifting unit according to claim 1, **characterized in that** the pneumatic line (88) between the shuttle valve (80) and the servo unit (74) is formed in such a way that the air flowing through the shuttle valve (80) is directly supplied to the pneumatic servo unit (74) for driver support.

3. An electropneumatic shifting unit according to claim 1, **characterized in that** the servo unit (74) comprises a 3/2-port directional control valve (92), which is controlled by the air flowing through the pneumatic line (88) and releases air contained in a reservoir (34) for the pneumatic servo unit (74).

## Revendications

1. Unité de commande électropneumatique pour une boîte de vitesses d'un véhicule (6), comprenant une boîte de base (10) dont les vitesses sont enclenchées manuellement par le conducteur à l'aide d'un levier de changement de vitesses (16), et un doubleur de gamme (12) enclenché par voie pneumatique par des soupapes (36, 38), dont les changements de vitesses peuvent être présélectionnés manuellement par le conducteur à l'aide d'un levier de changement de vitesses (16), et comprenant un capteur (64) reconnaissant une activation manuelle d'un embrayage de véhicule (8) par le conducteur, et comprenant un dispositif de commande électronique (20), celui-ci ouvrant les soupapes (36, 38), **caractérisée en ce que** est prévue une soupape à deux voies (80), celle-ci étant reliée respectivement par une ouverture d'entrée (78, 84) à une conduite de sortie (76,82) des soupapes (36, 38), lesquelles s'ouvrent en cas de présence d'un signal d'actionnement de l'embrayage, et **en ce que** la soupape à deux voies (80) est reliée par une ouverture de sortie (86) par l'intermédiaire d'une conduite pneumatique (88) à un dispositif d'assistance pneumatique (74), assistant le conducteur lors des changements de vitesses manuels dans la boîte de base (10).

2. Unité de commande électropneumatique selon la revendication 1, **caractérisée en ce que** la conduite pneumatique (88) entre la soupape à deux voies (80) et le dispositif d'assistance (74) est réalisée de manière à ce que l'air traversant la soupape à deux voies (80) arrive directement au dispositif d'assistance pneumatique (74) pour assister le conducteur du véhicule.

3. Unité de commande électropneumatique selon la revendication 1, **caractérisée en ce que** le dispositif d'assistance (74) comprend un distributeur (92), commandé par l'air traversant la conduite pneumatique (88) et libérant de l'air provenant d'un réservoir (34) et se déplaçant vers le dispositif d'assistance pneumatique (74).
